(19) **Europäisches Patentamt European Patent Office Office européen des brevets**

(11) **EP 1 620 372 B1**

(12) **FASCICULE DE BREVET EUROPEEN**

(45) Date de publication et mention de la délivrance du brevet:
**31.08.2016 Bulletin 2016/35**

(51) Int Cl.:
***C04B 35/107*** (2006.01)

(21) Numéro de dépôt: **04742510.3**

(86) Numéro de dépôt international:
**PCT/FR2004/000928**

(22) Date de dépôt: **15.04.2004**

(87) Numéro de publication internationale:
**WO 2004/094332 (04.11.2004 Gazette 2004/45)**

(54) **PRODUIT REFRACTAIRE POUR ELEMENT D'EMPILAGE D'UN REGENERATEUR D'UN FOUR VERRIER.**

FEUERFESTES PRODUKT FÜR STAPELELEMENT IN EINEM REGENERATOR EINES GLASSCHMELZOFENS

REFRACTORY PRODUCT FOR A CHECKERWORK ELEMENT OF A GLASS FURNACE REGENERATOR

(84) Etats contractants désignés:
**DE FR HU IT**

(30) Priorité: **17.04.2003 FR 0304819**

(43) Date de publication de la demande:
**01.02.2006 Bulletin 2006/05**

(73) Titulaire: **Saint-Gobain Centre de Recherches et d'Etudes Européen 92400 Courbevoie (FR)**

(72) Inventeurs:
• **BOUSSANT-ROUX, Yves**
  **F-84140 Montfayet (FR)**
• **GAUBIL, Michel**
  **F-84000 Avignon (FR)**
• **CITTI, Olivier**
  **F-84306 Cavaillon (FR)**

(74) Mandataire: **Nony**
  **11 rue Saint-Georges**
  **75009 Paris (FR)**

(56) Documents cités:
• **DATABASE WPI Section Ch, Week 199613 Derwent Publications Ltd., London, GB; Class L01, AN 1996-127577 XP002300328 SOKOLOV V A: "Fused and cast refractory for glass making furnace lining - contains oxide(s) of aluminium, silicon, boron and at least one of sodium, potassium, lithium, and one of magnesium and calcium, and fluorine or chlorine" -& RU 2 039 025 C (SOKOLOV V A), 9 juillet 1995 (1995-07-09)**
• **POPOV O N: "RATIONAL USE OF REFRACTORIES AND OPTIMUM DESIGNS OF REGENERATOR CHECKERWORK IN LGASS-MELTING FURNACES" GLASS AND CERAMICS, CONSULTANTS BUREAU. NEW YORK, US, vol. 59, no. 9/10, septembre 2002 (2002-09), pages 335-338, XP001144064 ISSN: 0361-7610**
• **PATENT ABSTRACTS OF JAPAN vol. 1998, no. 13, 30 novembre 1998 (1998-11-30) -& JP 10 218676 A (TOSHIBA MONOFRAX CO LTD), 18 août 1998 (1998-08-18)**

**EP 1 620 372 B1**

**Description**

L'invention concerne un produit réfractaire fondu et coulé à forte teneur en alumine ainsi que l'utilisation de ce produit comme élément pour la construction d'empilages dans les régénérateurs de fours verriers.

Les produits fondus et coulés, souvent appelés électrofondus, sont obtenus par fusion d'un mélange de matières premières appropriées dans un four à arc électrique ou par toute autre technique adaptée à ces produits. Le liquide fondu est ensuite coulé dans un moule puis le produit obtenu subit un cycle de refroidissement contrôlé.

La plupart des fours de verrerie dits à flammes, c'est-à-dire ayant comme source d'énergie des brûleurs à gaz ou à fuel, sont équipés de régénérateurs. Ces régénérateurs sont une succession de chambres garnies d'éléments céramiques formant un empilage et permettant de récupérer et restituer de la chaleur selon les cycles. Les gaz chauds ou les fumées qui proviennent du four en fonctionnement entrent dans l'empilage en général par la partie haute du régénérateur et libèrent leur énergie calorifique dans l'empilage. Pendant ce temps, de l'air froid est amené en bas d'un autre empilage chauffé au cours du cycle précédent pour récupérer l'énergie calorifique ; cet air sort chaud en haut de l'empilage d'où il est conduit jusqu'aux brûleurs du four pour assurer la combustion du carburant dans les meilleurs conditions. Les éléments qui constituent l'empilage subissent ce fonctionnement alternatif et doivent avoir une très bonne résistance aux chocs thermiques.

Les formes des éléments céramiques constituant l'empilage sont variées et sont par exemple décrites dans les brevets FR2142624, FR2248748 et FR2635372.

La composition des produits électrofondus utilisés pour réaliser les empilages est généralement du type AZS (Alumine-Zircone-Silice) ou du type alumineux.

Les produits contenant de fortes teneurs en alumine ou « alumineux » sont connus pour avoir une meilleure résistance aux hautes températures et sont donc principalement utilisés dans les parties hautes des empilages. On constate actuellement une évolution importante des conditions de fonctionnement des fours de verrerie. A titre d'exemple, on peut citer l'utilisation de plus en plus fréquente de combustible gazeux en substitution d'un combustible liquide de type fuel, en particulier dans les fours de fusion de verre pour les écrans de télévision. Par ailleurs, les fours de fusion de verre sodocalcique évoluent vers des conditions de fonctionnement plus réductrices. Ces évolutions dans la conduite des fours rendent les fumées plus agressives vis-à-vis des produits réfractaires situés dans les régénérateurs. En particulier, un phénomène de corrosion des parties basses des empilages est observé suite à des dépôts par condensation d'espèces alcalines (notamment NaOH, KOH...). Face à ce type de sollicitations, les produits réfractaires actuels alumineux ou AZS (voir les résultats de l'échantillon 1) n'offrent pas une résistance suffisante.

On connaît par ailleurs du brevet US 2 019 208, déposé le 16 décembre 1933, des produits réfractaires alumine-magnésie comportant entre 2 et 10 % de magnésie et présentant une bonne capacité de résistance aux variations thermiques. Mais ces produits posent des problèmes de faisabilité industrielle. La société SEPR fabrique et commercialise en outre le produit ER5312RX qui contient environ 87,5 % $Al_2O_3$, 4,5 % de $Na_2O$ et 8 % MgO. L'analyse cristallographique du ER5312RX révèle majoritairement de l'alumine bêta tierce. Alors que ce produit présente une excellente résistance à la corrosion par les vapeurs alcalines, il offre un comportement médiocre vis-à-vis de condensats d'espèces alcalines.

Le document RU 2 039 025C décrit un produit réfractaire fondu et coulé ayant la composition oxydique suivante (en pourcentage en poids): 98,3% $Al_2O_3$, 0,5% $SiO_2$, 0,4% MgO, 0,1% CaO, 0,1% $B_2O_3$ et 0,1% F.

Il existe donc un besoin pour un nouveau produit réfractaire électrofondu ayant une résistance accrue à la corrosion par des espèces liquides majoritairement constituées d'éléments alcalins et présentant une bonne résistance aux chocs thermiques.

La présente invention vise à satisfaire ce besoin.

Plus particulièrement, elle concerne un produit réfractaire fondu et coulé ayant la composition chimique pondérale moyenne suivante, en pourcentage en poids sur la base des oxydes :

$$0,4 \% < MgO < 2,5 \%$$

$$0,2 \% < SiO_2 < 2,0 \%$$

$$CaO < 0,4 \%$$

Impuretés : < 0,5%
$Al_2O_3$: complément.

Par « complément », on entend une quantité nécessaire pour atteindre 100%. Les impuretés sont classiquement constituées par $Na_2O$ et $Fe_2O_3$.

Comme on le verra plus en détail dans la suite de la description, les produits réfractaires selon l'invention possèdent une grande résistance à la corrosion alcaline et aux chocs thermiques.

Par « corrosion alcaline » on entend la corrosion résultant de la condensation de gaz alcalins. A titre d'exemple, on peut citer le cas des fumées issues de la fusion de verre sodo-potassique qui, lorsque la teneur en soufre dans les fumées est faible et/ou que les conditions sont réductrices, donnent lieu à un phénomène de condensation d'espèces telles que NaOH, OH en partie basse des empilages. En effet, l'absence de soufre ou bien des conditions réductrices empêchent la formation d'espèces telles que $Na_2SO_4$ ou $K_2SO_4$. Un phénomène de corrosion en phase liquide des matériaux réfractaires est alors constaté.

Sauf mention contraire, les pourcentages utilisés dans la présente demande se réfèrent toujours à des pourcentages en poids sur la base des oxydes.

Selon d'autres caractéristiques préférées du produit réfractaire selon l'invention,

- la teneur en MgO est telle que 0,7 % < MgO et/ou MgO < 2,0 %;
- la teneur en $SiO_2$ est telle que 0,5 % < $SiO_2$ et/ou $SiO_2$ < 1 %;
- la teneur en CaO telle que CaO < 0,1 % ;
- le produit réfractaire selon l'invention comporte en outre, en pourcentage en poids sur la base des oxydes,

    - une teneur en $Na_2O$ telle que 0,1 % < $Na_2O$ et/ou $Na_2O$ < 0,6 % ;
    - et/ou une teneur en $ZrO_2$ telle que $ZrO_2$ < 4,0 %, de préférence telle que $ZrO_2$ < 0,1 %.

De préférence, on ajoute dans le mélange des matières premières du fluor en une quantité comprise entre 0,1 et 0,6 %. Le produit comporte donc de préférence, en pourcentage en poids sur la base des oxydes, une teneur en F telle que 0,1 % < F et/ou F < 0,6 %.

L'invention concerne encore l'utilisation d'un produit réfractaire selon l'invention comme élément d'empilage d'un régénérateur d'un four verrier, de préférence comme élément des parties basses d'un empilage d'un régénérateur. Avantageusement, le produit selon l'invention peut être utilisé dans des fours de fusion de verre sodocalcique fonctionnant dans des conditions réductrices.

Le tableau 1 suivant récapitule les résultats d'essais effectués sur différents échantillons. Les produits testés, non limitatifs, sont donnés dans le but d'illustrer l'invention.

Les matières premières suivantes ont été utilisées :

- l'alumine de type AC44 commercialisée par la société Pechiney et contenant en moyenne 99,5% d'$Al_2O_3$, ($Na_2O$: 3700 ppm, $SiO_2$: 100 ppm, CaO: 160 ppm, $Fe_2O_3$ : 120 ppm)
- l'alumine de type AR75 commercialisée par la société Pechiney et contenant en moyenne 99,4 % d'$Al_2O_3$, ($Na_2O$ 2700 ppm, $SiO_2$ 100 ppm, CaO 160 ppm, $Fe_2O_3$ 110 ppm)
- la magnésie NEDMAG 99 ou NEDMAG 99,5 contenant respectivement plus de 99 % et 99,5 % de MgO, commercialisées par la société Nedmag Industries,
- le fluor sous forme $AlF_3$.

Les mélanges de matières premières ont été fondus selon un procédé classique de fusion en four à arc, tel que décrit par exemple dans FR 1 208 577 ou dans FR 2 058 527, puis coulés dans un moule (par exemple selon le procédé décrit dans FR 2 088 185) pour obtenir des pièces de type X3, pouvant servir comme éléments de régénérateur. Ces pièces ont une forme cruciforme à quatre branches, chaque branche ayant une hauteur de 420 mm, une longueur de 130 mm, et une épaisseur 30 mm.

Pour chacun des exemples, on indique le rendement de fabrication des pièces, c'est-à-dire le pourcentage de pièces non morcelées et ne présentant pas de fentes traversantes. Le rendement est considéré comme « acceptable » s'il est supérieur à 60%, et comme « bon » s'il est supérieur à 70 %.

L'analyse chimique moyenne des produits obtenus est donnée dans le tableau 1 en pourcentage en poids sur la base des oxydes.

Tableau 1

| Echantillon | $Al_2O_3$ + impuretés | MgO | $SiO_2$ | $Na_2O$ | CaO | $ZrO_2$ | Rendement | Test A | Test B | $AlF_3$ |
|---|---|---|---|---|---|---|---|---|---|---|
| 1 | 51,30 | 0,00 | 15,60 | 1,10 | | 32,0 | | 5 | | NON |
| 2 | 98,65 | 0,00 | 0,99 | 0,36 | | | 100 | 0,9 | 10 | NON |

(suite)

| Echantillon | Al$_2$O$_3$ + impuretés | MgO | SiO$_2$ | Na$_2$O | CaO | ZrO$_2$ | Rendement | Test A | Test B | AlF$_3$ |
|---|---|---|---|---|---|---|---|---|---|---|
| 3 | 97,74 | 0,00 | 0,56 | 0,30 | 1,40 | | 75 | 4,3 | 10 | OUI |
| 4 | 98,92 | 0,38 | 0,45 | 0,25 | | | 80 | | 10 | NON |
| 5 | 98,48 | 0,72 | 0,55 | 0,25 | | | 80 | 0,64 | 20 | NON |
| 6 | 98,23 | 0,85 | 0,62 | 0,30 | | | 70 | | 22 | OUI |
| 7 | 97,77 | 0,85 | 1,14 | 0,24 | | | 70 | 1,19 | 20 | OUI |
| 8 | 98,48 | 0,87 | 0,22 | 0,13 | | 0,3 | 70 | | | OUI |
| 9 | 98,87 | 0,88 | 0,00 | 0,25 | | | 0 | | | NON |
| 10 | 97,89 | 1,00 | 0,85 | 0,26 | | | 70 | | >20 | OUI |
| 11 | 97,16 | 1,00 | 1,59 | 0,25 | | | 70 | 1,32 | 20 | OUI |
| 12 | 96,90 | 1,00 | 0,50 | 0,20 | | 1,4 | 80 | 0,94 | >20 | OUI |
| 13 | 95,73 | 1,00 | 0,50 | 0,27 | | 2,5 | 70 | | | OUI |
| 14 | 98,06 | 1,06 | 0,25 | 0,13 | | 0,5 | 70 | | | OUI |
| 15 | 97,99 | 1,08 | 0,53 | 0,20 | 0,20 | | 78 | 1,06 | >20 | OUI |
| 16 | 98,67 | 1,09 | 0,00 | 0,24 | | | 0 | | | NON |
| 17 | 98,15 | 1,10 | 0,55 | 0,20 | | | 75 | | >26 | NON |
| 18 | 96,56 | 1,12 | 1,93 | 0,39 | | | 70 | 1,52 | | OUI |
| 19 | 96,98 | 1,14 | 0,54 | 0,24 | 1,10 | | 78 | 1,64 | 15 | OUI |
| 20 | 95,79 | 1,15 | 0,63 | 0,33 | 2,10 | | 77 | | 10 | OUI |
| 21 | 98,58 | 1,17 | 0,00 | 0,25 | | | 30 | | | OUI |
| 22 | 97,03 | 1,22 | 1,30 | 0,45 | | | 85 | | | NON |
| 23 | 94,23 | 1,28 | 0,54 | 0,25 | | 3,7 | 60 | 1,07 | 20 | OUI |
| 24 | 97,84 | 1,32 | 0,60 | 0,24 | | | 89 | 1,04 | >30 | OUI |
| 25 | 97,84 | 1,32 | 0,60 | 0,24 | | | 89 | 0,85 | >30 | OUI |
| 26 | 98,37 | 1,33 | 0,00 | 0,30 | | | 0 | | >26 | NON |
| 27 | 97,66 | 1,33 | 0,79 | 0,22 | | | 89 | | >30 | OUI |
| 28 | 96,81 | 1,35 | 1,27 | 0,57 | | | 70 | | | NON |
| 29 | 98,01 | 1,36 | 0,39 | 0,24 | | | 100 | 0,42 | >26 | OUI |
| 30 | 97,18 | 1,80 | 0,30 | 0,12 | | 0,6 | | 1,12 | >20 | OUI |
| 31 | 96,72 | 1,83 | 1,11 | 0,34 | | | 70 | | >20 | NON |
| 32 | 97,31 | 1,98 | 0,48 | 0,23 | | | 80 | | 20 | OUI |
| 33 | 96,42 | 2,25 | 0,48 | 0,15 | | 0,7 | 70 | | 16 | OUI |
| 34 | 96,88 | 2,32 | 0,56 | 0,24 | | | 70 | 0,64 | 18 | NON |
| 35 | 95,31 | 3,91 | 0,47 | 0,31 | | | 69 | 0,46 | 15 | NON |
| 36 | 87,50 | 8,00 | 0,00 | 4,50 | | | 100 | 5,9 | >31 | NON |

Les échantillons 1, 2, 3, 9, 16, 20, 21, 26, 35 et 36 représentent des exemples qui ne sont pas conformes à la présente invention.

Les impuretés ne comprennent pas MgO, Na$_2$O CaO et ZrO$_2$.

Pour simuler la condensation de soude issue des fumées des fours de verrerie, nous avons testé (test A) la résistance à la soude liquide d'échantillons prélevés au centre d'une branche des différentes pièces réalisées. La soude liquide fragilise les matériaux en transformant une partie de l'alumine en aluminate de sodium. L'expansion qui accompagne cette transformation fragilise le matériau en créant une microfissuration des grains d'alumine transformés. Par ailleurs, les aluminates de sodium ont la caractéristique d'être très solubles dans l'eau. Selon le test A, l'échantillon est placé dans un creuset en zirconium et est recouvert de soude. Le creuset est ensuite porté à 900°C pendant une heure. L'échantillon est ensuite plongé dans de l'eau distillée et l'alumine solubilisée est dosée. Le chiffre indiqué pour le test A correspond au pourcentage d'alumine solubilisée. La valeur est jugée bonne si elle est inférieure à 2,5 et très bonne si elle est inférieure à 1,5.

L'aptitude aux variations thermiques d'un échantillon est déterminée à l'aide du test B qui consiste à faire subir des cycles thermiques aux pièces entières. Chaque cycle est constitué par une phase de maintien à 1250°C pendant 15 minutes, suivie d'une phase de refroidissement à l'air ambiant pendant 15 minutes. La valeur indiquée correspond au nombre de cycles avant rupture ou morcellement de la pièce. On considère que les pièces testées sont compatibles avec une utilisation dans des empilages de régénérateurs si le nombre de cycles avant rupture est supérieur ou égal à 20.

L'échantillon de l'exemple 1 du tableau 1 est le produit ER1682RX, fabriqué et commercialisé par la société SEPR. Il contient environ 50 % d'$Al_2O_3$, 32 % de $ZrO_2$ et 16 % de $SiO_2$. Son analyse cristallographique révèle environ 47 % de corindon, 21 % de phase vitreuse et 32 % de zircone. L'échantillon de l'exemple 36 du tableau 1 est le produit ER5312RX cité dans le préambule de la description.

L'analyse du tableau 1 permet de tirer les conclusions suivantes.

Les exemples 1 à 4 montrent que l'ajout d'au moins 0,4 % de magnésie MgO est nécessaire pour obtenir des produits capables de passer les tests A et B. Les produits alumineux ne contenant pas ou peu de magnésie ne résisteraient donc pas aux chocs thermiques dans une utilisation comme élément d'empilage d'un régénérateur.

La comparaison des exemples 4 et 5 indique qu'une teneur en MgO supérieure à 0,7 % est préférable afin d'améliorer la résistance au cyclage thermique. La limite supérieure pour MgO semble être liée à un point eutectique entre corindon et spinelle.

Cependant, les exemples 33 à 35 démontrent qu'au delà de 2 % de MgO, les produits résistent moins bien au cyclage thermique. Cette résistance dégradée est probablement due à une augmentation de la compacité des produits et à un mauvais contrôle de la porosité, c'est-à-dire à une mauvaise répartition du volume poreux, ce qui rend ces produits inutilisables pour l'application visée. De préférence, la teneur en MgO est donc inférieure à 2,5 %, de préférence encore inférieure à 2 %.

L'exemple 36, comportant 8 % de MgO est représentatif de l'état de la technique. Il ne comporte pas de $SiO_2$ et résiste mal aux attaques alcalines telles que définies par le test A. En revanche, mais il présente un très bon comportement aux chocs thermiques.

Nous pensons que les teneurs en MgO du produit selon l'invention lui confèrent un volume poreux et une répartition de ce volume poreux tels que les pièces peuvent s'accommoder des variations de volume dues aux variations de température. Les produits de l'invention ont en effet une porosité comprise typiquement entre 10 et 20 % répartie de manière quasi uniforme dans la pièce.

Selon l'invention, la présence de silice est nécessaire pour avoir une faisabilité industrielle correcte, c'est-à-dire un rendement supérieur ou égal à 70 %, comme le montrent les exemples 9, 16, 21, 26, sauf à augmenter la teneur en $Na_2O$, auquel cas (exemple 36), le produit ne passe plus le test A.

Une quantité minimale de 0,2 % de $Si_2O$ est nécessaire pour obtenir un effet significatif. De préférence, une teneur en $SiO_2$ supérieure à 0,4 %, de préférence encore supérieure à 0,5 % est souhaitable notamment pour augmenter la résistance aux chocs thermiques.

Par contre, au-delà de 1 % (exemples 7, 11, 18), la résistance du produit aux attaques alcalines diminue. De préférence, la teneur en $SiO_2$ est donc de préférence inférieure à 2 %, de préférence encore inférieure à 1%. Au delà de 2 %, la phase silicatée, plus fragile vis-à-vis des vapeurs alcalines, est formée en quantité trop importante.

La présence de $Na_2O$ peut également conduire à la formation d'alumine bêta dont la résistance à la corrosion alcaline est mauvaise. Au delà de 0,6 %, la résistance aux attaques alcalines devient insuffisante, comme le montrent les exemples 1 et 36.

L'ajout de $Na_2O$, de préférence en une quantité supérieure à 0,1% pour obtenir un effet significatif, est avantageux car $Na_2O$ se combine avec la silice et les autres composés pour former une phase vitreuse dont le positionnement intergranulaire est favorable à l'amélioration de la résistance mécanique du matériau à haute température. On évite ainsi la formation de contraintes lors de changements de température.

La présence d'au moins 0,1 % de fluor est avantageuse pour améliorer l'homogénéité de la répartition du volume poreux. Un examen visuel des produits permet en effet de constater que la présence de fluor évite la présence de « poches » à l'intérieur des produits. L'influence du fluor sur les résultats aux tests A et B n'est cependant pas sensible.

Par contre, le fluor est un élément très agressif vis-à-vis des installations et il faut donc en limiter la teneur à moins de 0,6 %.

Des ajouts volontaires limités de zircone ne diminuent pas les propriétés avantageuses des produits de l'invention. La présence de zircone à des teneurs inférieures à 4 % est tolérée. Par contre, une quantité de zircone supérieure conduit à de mauvaises performances en cyclage thermique et à une faisabilité industrielle plus difficile. Ainsi l'exemple 23 a-t-il un rendement dans la limite de l'acceptable. Pour ces raisons, la teneur en zircone doit être inférieure à 4 %, de préférence être inférieure à 1 %, de préférence encore être nulle.

L'ajout de CaO n'est pas souhaitable. Cet ajout n'a pas d'influence bénéfique sur la résistance aux vapeurs alcalines (exemple 3). En outre, la tenue aux cycles thermiques est nettement dégradée (exemples 3, 19 et 20).

La teneur en CaO du produit selon l'invention est donc inférieure à 0,4 %, de préférence inférieure à 0,1 %, et de préférence encore sensiblement nulle. En effet, la présence de CaO conduit à la formation d'aluminates de chaux, en particulier $CaO.6Al_2O_3$, de structure proche de l'alumine bêta, moins résistants à la corrosion en milieu alcalin. Tous les alcalino-terreux n'offrent donc pas les mêmes avantages que MgO.

La présence d'autres composés, autres que les impuretés inévitables, n'est pas souhaitable. En particulier, $B_2O_3$ et $K_2O$ doivent être évités. Leurs teneurs respectives doivent de préférence être inférieures à 0,05 %.

L'analyse cristallographique des produits de l'invention révèle typiquement plus de 97 % d'alumine sous forme de corindon, plus de 2 % de spinelle $Al_2O_3$-MgO et moins de 1 % de phase silicatée ou phase vitreuse. Les produits dont l'analyse chimique révèle la présence de zircone, présentent, à l'analyse cristallographie jusqu'à 4 % de zircone sous forme monoclinique, la teneur en corindon étant diminuée d'autant.

**Revendications**

1. Produit réfractaire fondu et coulé ayant la composition chimique pondérale moyenne suivante, en pourcentage en poids sur la base des oxydes:

$$0,4 \% < MgO < 2,5 \% \qquad 0 \leq Na_2O < 0,6\%$$
$$0,2 \% < SiO_2 < 2,0 \% \qquad 0 \leq F < 0,6\%$$
$$CaO < 0,4 \% \qquad 0 \leq ZrO_2 < 4\%$$
$$\text{Impuretés} : < 0,5 \% \qquad B_2O_3 < 0,05\%$$
$$Al_2O_3 : \text{complément}$$

2. Produit réfractaire selon la revendication 1, **caractérisé en ce qu'**il comporte, en pourcentage en poids sur la base des oxydes, une teneur en MgO telle que :

$$0,7 \% < MgO \ \text{et/ou} \ MgO < 2,0 \%$$

3. Produit réfractaire selon l'une des revendications 1 et 2, **caractérisé en ce qu'**il comporte, en pourcentage en poids sur la base des oxydes, une teneur en $SiO_2$ telle que :

$$0,5 \% < SiO_2 \ \text{et/ou} \ SiO_2 < 1 \%$$

4. Produit réfractaire selon l'une quelconque des revendications précédentes, **caractérisé en ce qu'**il comporte, en pourcentage en poids sur la base des oxydes, une teneur en $Na_2O$ telle que :

$$0,1 \% < Na_2O$$

5. Produit réfractaire selon l'une quelconque des revendications précédentes, **caractérisé en ce qu'**il comporte, en pourcentage en poids sur la base des oxydes, une teneur en F telle que :

$$0,1 \% < F$$

6. Produit réfractaire selon l'une quelconque des revendications précédentes, **caractérisé en ce qu'**il comporte, en pourcentage en poids sur la base des oxydes, une teneur en CaO telle que :

$$CaO < 0,1\ \%$$

**7.** Produit réfractaire selon l'une quelconque des revendications précédentes, **caractérisé en ce qu'**il comporte, en pourcentage en poids sur la base des oxydes, une teneur en $ZrO_2$ telle que : $ZrO_2 < 0,1\ \%$

**8.** Utilisation d'un produit réfractaire selon l'une quelconque des revendications précédentes comme élément d'empilage d'un régénérateur d'un four verrier.

**9.** Utilisation d'un produit réfractaire selon l'une quelconque des revendications 1 à 7 comme élément d'une partie basse d'un empilage d'un régénérateur d'un four verrier.

**Patentansprüche**

**1.** Geschmolzenes und gegossenes Feuerfestprodukt, welches eine mittlere gewichtsmäßige chemische Zusammensetzung in Gewichtsprozenten auf der Basis von Oxyden folgendermaßen aufweist:

| | |
|---|---|
| $0,4\% < MgO < 2,5\%$ | $0 \leq Na_2O < 0,6\%$ |
| $0,2\% < SiO_2 < 2,0\%$ | $0 \leq F < 0,6\%$ |
| $CaO < 0,4\%$ | $0 \leq ZrO_2 < 4\%$ |
| Verunreinigungen: $< 0,5\%$ | $B_2O_3 < 0,05\%$ |
| Komplement: $Al_2O_3$ | |

**2.** Feuerfestprodukt nach Anspruch 1, **dadurch gekennzeichnet, dass** es in Gewichtsprozent auf der Basis von Oxiden einen Gehalt an MgO aufweist, derart, dass

$$0,7\% < MgO\ \text{und/oder}\ MgO < 2,0\%.$$

**3.** Feuerfestprodukt nach einem der Ansprüche 1 und 2, **dadurch gekennzeichnet, dass** es in Gewichtsprozenten auf der Basis von Oxiden einen Gehalt an $SiO_2$ aufweist, derart, dass

$$0,5\% < SiO_2\ \text{und/oder}\ SiO_2 < 1\%$$

**4.** Feuerfestprodukt nach einem der vorhergehenden Ansprüche, **dadurch gekennzeichnet, dass** es in Gewichtsprozenten auf der Basis von Oxiden einen Gehalt an $Na_2O$ aufweist, derart, dass

$$0,1\% < Na_2O$$

**5.** Feuerfestprodukt nach einem der vorhergehenden Ansprüche, **dadurch gekennzeichnet, dass** es in Gewichtsprozenten auf der Basis von Oxiden einen Gehalt an F aufweist, derart, dass

$$0,1\% < F$$

**6.** Feuerfestprodukt nach einem der vorhergehenden Ansprüche, **dadurch gekennzeichnet, dass** es in Gewichtsprozenten auf der Basis von Oxiden einen Gehalt an CaO aufweist, derart, dass

$$CaO < 0,1\%$$

7.  Feuerfestprodukt nach einem der vorhergehenden Ansprüche, **dadurch gekennzeichnet, dass** es in Gewichtsprozenten auf der Basis von Oxiden einen Gehalt an $ZrO_2$ aufweist, derart, dass: $ZrO_2 < 0,1\%$

8.  Verwendung eines Feuerfestprodukts nach einem der vorhergehenden Ansprüche als ein Stapelelement eines Regenerators eines Glasofens.

9.  Verwendung eines Feuerfestprodukts nach einem der Ansprüche 1 bis 7, als ein Element eines unteren Teils eines Stapels eines Regenerators eines Glasofens.

**Claims**

1.  Fused-cast refractory product having the following average chemical composition by weight, the percentages by weight being on the basis of the oxides:

    $0.4\% < MgO < 2.5\%$;    $0 \leq Na_2O < 0.6\%$
    $0.2\% < SiO_2 < 2.0\%$;    $0 \leq F < 0.6\%$
    $CaO < 0.4\%$;    $0 \leq ZrO_2 < 4\%$
    impurities: $< 0.5\%$;    $B_2O_3 < 0.05\%$
    $Al_2O_3$: balance.

2.  Refractory product according to claim 1, **characterized in that** it contains, as a percentage by weight on the basis of the oxides, an MgO content such that:

    $$0.7\% < MgO \text{ and/or } MgO < 2.0\%.$$

3.  Refractory product according to either of claims 1 and 2, **characterized in that** it contains, as a percentage by weight on the basis of the oxides, an $SiO_2$ content such that:

    $$0.5\% < SiO_2 \text{ and/or } SiO_2 < 1\%.$$

4.  Refractory product according to any one of preceding claims **characterized in that** it contains, as a percentage by weight on the basis of the oxides, an $Na_2O$ content such that:

    $$0.1\% < Na_2O.$$

5.  Refractory product according to any one of preceding claims **characterized in that** it contains, as a percentage by weight on the basis of the oxides, an F content such that:

    $$0.1\% < F.$$

6.  Refractory product according to any one of preceding claims **characterized in that** it contains, as a percentage by weight on the basis of the oxides, a CaO content such that:

    $$CaO < 0.1\%.$$

7.  Refractory product according to any one of claims **characterized in that** it contains, as a percentage by weight on the basis of the oxides, a $ZrO_2$ content such that:

$$ZrO_2 < 0.1\%.$$

8. Use of a refractory product according to any one of preceding claims as a checker work element of a glass furnace regenerator.

9. Use of a refractory product according to any one of claims 1 to 7 as an element of a bottom part of a checker work of a glass furnace regenerator.

**EP 1 620 372 B1**

## RÉFÉRENCES CITÉES DANS LA DESCRIPTION

**Documents brevets cités dans la description**

- FR 2142624
- FR 2248748
- FR 2635372
- US 2019208 A
- RU 2039025 C
- FR 1208577
- FR 2058527
- FR 2088185